(19) Europäisches Patentamt
European Patent Office
Office européen des brevets

(11) EP 2 409 782 B1

(12) **EUROPEAN PATENT SPECIFICATION**

(45) Date of publication and mention
of the grant of the patent:
**16.07.2014 Bulletin 2014/29**

(21) Application number: **10753385.3**

(22) Date of filing: **26.02.2010**

(51) Int Cl.:
***B05D 5/06*** *(2006.01)*          ***C09D 5/33*** *(2006.01)*
***C09D 7/12*** *(2006.01)*          ***C09D 201/00*** *(2006.01)*

(86) International application number:
**PCT/JP2010/053076**

(87) International publication number:
**WO 2010/106890 (23.09.2010 Gazette 2010/38)**

(54) **METHOD FOR REFLECTING INFRARED LIGHT**

VERFAHREN ZUR REFLEXION VON INFRAROTLICHT

PROCÉDÉ DE RÉFLEXION DE LUMIÈRE INFRAROUGE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **17.03.2009 JP 2009064042**

(43) Date of publication of application:
**25.01.2012 Bulletin 2012/04**

(73) Proprietor: **Toyo Aluminium Kabushiki Kaisha
Osaka-shi, Osaka 541-0056 (JP)**

(72) Inventors:
• **LAI, Gaochao
Osaka-shi
Osaka 541-0056 (JP)**

• **HASHIZUME, Yoshiki
Osaka-shi
Osaka 541-0056 (JP)**

(74) Representative: **Bockhorni & Kollegen
Elsenheimerstraße 49
80687 München (DE)**

(56) References cited:
**EP-A1- 1 990 377          WO-A1-2007/094253
WO-A1-2010/013452      DE-A1- 3 444 595
JP-A- 2003 147 226        JP-A- 2003 292 825**

**Description**

TECHNICAL FIELD

The present invention relates to an infrared reflection method employed to apply a coloring composition containing an infrared reflective pigment to an object to obtain a black coated object having an effect reflecting infrared radiation.

BACKGROUND ART

Conventionally, thermal barrier paints have been used to prevent roads, oil or similar reservoir tanks and the like from having increased temperature. Furthermore, in recent years, to prevent global warming, an attempt has been made to improve paints' characteristics to reflect solar heat to prevent buildings, automobiles and the like from internally having increased temperature and thus save energy required for air conditioning. To allow an object to reflect solar heat, it is effective to coat the object to have an appearance in white, silver or a pale color to reflect solar heat effectively.

When buildings, automobile and the like objects are provided with black or deep colored appearance, however, carbon black, iron black or a similar pigment absorbing a large amount of heat is required, and it is thus difficult to obtain sufficient heat reflection characteristics.

Accordingly, there is a strong demand for a black or deep color pigment which substitutes carbon black, iron black and the like and exhibits excellent solar heat reflection characteristics. As one such excellently heat reflective pigment, a pigment has been studied that absorbs visible light and has excellent infrared reflection characteristics. More specifically, a chromium oxide based composite oxide pigment (Japanese Patent Laying-Open No. 2000-072990 (patent literature 1), Japanese Patent Laying-Open No. 2001-311049 (patent literature 2)), an azomethine based pigment (Japanese Patent Laying-Open No. 2004-027241 (patent literature 3), Japanese Patent Laying-Open No. 2004-174469 (patent literature 4)), a perylene black, azo dye (patent literature 4), and a strontium iron oxide perovskite excellent in blackness (Japanese Patent Laying-Open No. 2000-264639 (patent literature 5)) are known. Furthermore, there is also proposed black composite oxide perovskite containing Fe, Co and Al and furthermore containing one or more metallic elements selected from Li, Mg, Ca, Ti, Mn, Zn, Sn, Zr, Si and Cu (Japanese Patent Laying-Open No. 2008-044805 (patent literature 6)).

The chromium oxide based composite oxide pigment, however, contains a harmful element, Cr, and cannot be used in applications requiring being chromium-free. The azomethine based pigment, perylene black, azo dye and the like organic pigments are inferior in blackness and coloring power and are also insufficient in weather resistance. Accordingly, as described in patent literature 4, a complicated painting/coating process is required to obtain black or deep color. Perovskite based pigments that do not contain chromium are also poor in coloring power and also have an insufficient ability to reflect infrared radiation.

On the other hand, a pigment for design is known that has an aluminum or similar metallic pigment coated with aluminum oxide, silicon oxide or a similar interference layer and thereon further coated with a metallic particle layer (International Publication WO2007/094253 (patent literature 7)). This document, however, only describes developing a color by an interference effect, and does not suggest providing a black pigment having a function to reflect infrared radiation.

CITATION LIST

PATENT LITERATURES

PTL 1: Japanese Patent Laying-Open No. 2000-072990
PTL 2: Japanese Patent Laying-Open No. 2001-311049
PTL 3: Japanese Patent Laying-Open No. 2004-027241
PTL 4: Japanese Patent Laying-Open No. 2004-174469
PTL 5: Japanese Patent Laying-Open No. 2000-264639
PTL 6: Japanese Patent Laying-Open No. 2008-044805
PTL 7: International Publication WO2007/094253

Further prior art is known from WO 2010/013452 A1, which discloses an infrared reflective black pigment which has a good infrared reflectivity. The infrared reflective black pigment is composed of a complex oxide containing substantially no Cr, while containing at least Co, Mg, Fe, Al and Si. The infrared reflective black pigment has a molar ratio $Si/(Co + Mg + Fe + Al + Si)$ of 10-90%, an average particle diameter of 0.02-2.0 $\mu$m, a sunlight reflectance of 35-50%, and a reflectance for an infrared region wavelength of 1000 nm of more than 55%.

From DE 34 44 595 A1 a process is known which is used for the production of panes of thermoplastics or of silicate glass, coated on one side and reflecting infrared rays but largely transparent to visible light or ultraviolet rays. The pane to be coated is guided under a slot nozzle which extends over the whole width of the pane and from which a dispersion of aluminum particles is emitted in the form of a continuous liquid veil or liquid curtain. The aluminum particles are dispersed in a solution of a film-forming polymer in an organic solvent. The free-flowing dispersion reaches the moving pane and the thus coated pane passes under thermal radiators, the resulting temperature in the coating being kept below the boiling point of the solvent.

From EP 1 990 377 A1 a colored metallic pigment is known which comprises at least a metallic pigment, an amorphous silicon oxide film layer provided on the surface of the metallic pigment, a metal layer provided on the surface of the amorphous silicon oxide film layer, and metallic particles provided on the surface of the metal layer.; The metallic particles are provided so as to directly cover a part of the surface of the metal layer. In the colored metallic pigment, the metal layer preferably comprises at least one metal selected from Sn, Pd, Pt and Au. The metallic particle preferably comprises at least one metal selected from Cu, Ni and Ag.

SUMMARY OF INVENTION

TECHNICAL PROBLEM

The present invention has been made to overcome the above disadvantages and it contemplates an infrared reflection method employing a coloring composition to establish both black or deep colored appearance and infrared reflection.

SOLUTION TO PROBLEM

The present infrared reflection method includes the steps of: preparing an object to be coated; and applying a coloring composition containing an infrared reflective pigment to the object to obtain a black coated object, the infrared reflective pigment having a structure including a metallic substrate, a metal oxide interference layer covering a surface of the metallic substrate, and metallic particles partially covering a surface of the metal oxide interference layer.

The infrared reflective pigment has the metal oxide interference layer having an optical thickness within a range of 30-110 nm and the metallic particles having an average particle size within a range of 10-50 nm, and the infrared reflective pigment has the metallic substrate formed of aluminum.

Furthermore, the infrared reflective pigment has the metal oxide interference layer formed of silicon oxide. Preferably, the infrared reflective pigment has the metal oxide interference layer underlying a metallic intermediate layer having a surface partially covered with the metallic particles.

Furthermore, preferably, the infrared reflective pigment has an outermost covering layer at least on the metallic particles and presents black color. Furthermore, the infrared reflective pigment can be formed of two or more types of pigments complementary in color.

Preferably, when the coloring composition contains 10 parts by mass of the infrared reflective pigment and 100 parts by mass of a resin binder and is applied to the object to have a thickness of 50 μm to provide a black coated object, the black coated object has a value in lightness (or an L* value) equal to or smaller than 20 and a value in color saturation (or a C* value) equal to or smaller than 5, as measured with a color-difference meter, and a reflectance for an infrared ray having a wavelength of 1600 nm relative to that for a visible ray of light having a wavelength of 600 nm at a ratio equal to or larger than 2.5.

Furthermore, the present invention also relates to an infrared reflective pigment used in the above infrared reflection method.

ADVANTAGEOUS EFFECTS OF INVENTION

The present infrared reflection method can thus establish both black or deep colored appearance and infrared reflection excellently effectively.

BRIEF DESCRIPTION OF DRAWING

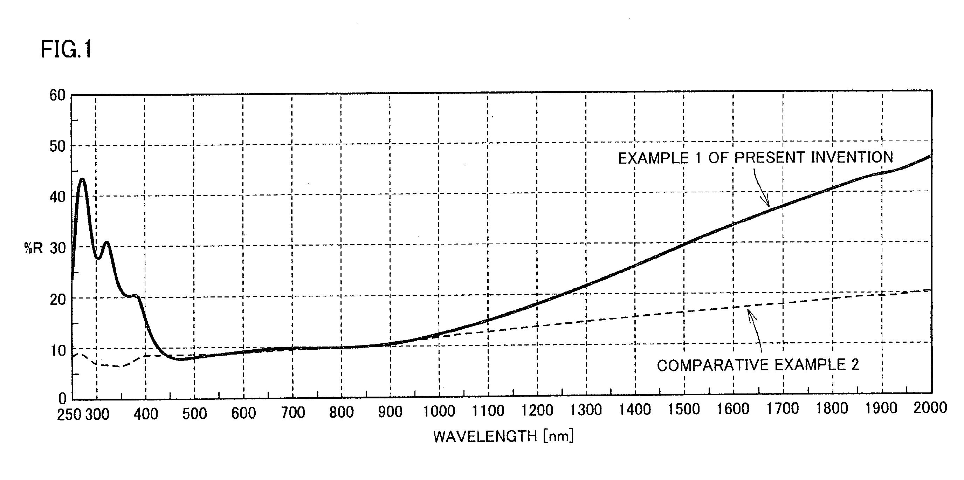

Fig. 1 is a graph of reflectance versus wavelength of light.

DESCRIPTION OF EMBODIMENTS

Hereinafter the present invention will be described more specifically.

Infrared Reflection Method

The present infrared reflection method includes the steps of: preparing an object to be coated; and applying a coloring composition containing an infrared reflective pigment to the object to obtain a black coated object, wherein said infrared reflective pigment has a structure including a metallic substrate, a metal oxide interference layer covering a surface of said metallic substrate, and metallic part covering a surface of said metal oxide interference layer, said metal oxide interference layer has an optical thickness within a range of 30-110 nm, said metallic particles have an average particle size within a range of 10-50 nm, said metallic substrate is aluminum, and said metal oxide interference layer is formed of silicon oxide. As long as including these steps, the present infrared reflection method may include any other step(s).

The present infrared reflection method that applies a coloring composition containing an infrared reflective pigment, as will be described later, to an object thus provides a black coated object successfully establishing both a black or deep colored appearance and infrared reflection significantly. Hereinafter, each step will be described.

Step of Preparing an Object To Be Coated

The present infrared reflection method includes the step of preparing an object to be coated. The object may be prepared in any method.

The object is desired to exhibit a black or deep colored appearance and reflect infrared radiation, and is subjected to the present infrared reflection method. The object can for example be, but is not limited to, buildings, automobiles, outdoor tanks, ship, roof materials, railway vehicles and the like. Furthermore, as is also apparent from these examples, the object may be formed of any material, and a significantly wide range of materials, such as metal, concrete, plastic, rubber, wood, paper and the like, is applicable.

Step of Applying a Coloring Composition to Obtain a Black Coated Object

The present infrared reflection method includes the step of applying a coloring composition containing an infrared reflective pigment to the object to obtain a black coated object. Herein in the present invention the black coated object is, as is apparent from the object of the present invention, not limited to objects having colors presenting black color, but also encompasses those presenting deep colors. In other words, the black coated object will be an object presenting a black or deep colored appearance and also having a function to reflect infrared radiation. The present infrared reflection method can thus be said to be implemented by this black coated object. The present invention, however, relates to an infrared reflection method.

Herein the coloring composition is applied to the object in methods including a variety of painting/coating, printing and other application methods without particular limitation. The present coloring composition may thus be a painting composition or may be an ink composition.

Furthermore, while the black coated object is obtained by applying a coloring composition containing an infrared reflective pigment to an object, the object having the coloring composition applied thereto may subsequently be dried, baked, have the composition fixed, or undergo a similar, variety of steps.

The present black coated object thus has such a configuration that a coloring composition containing an infrared reflective pigment is applied to an object to be coated, and preferably the coloring composition is applied to the object to have a thickness of approximately 5-100 $\mu$m, as measured after the coloring composition has been dried (or fixed).

When the coloring composition contains 10 parts by mass of the infrared reflective pigment and 100 parts by mass of a resin binder and is applied to the object to have a thickness of 50 $\mu$m, as measured after the coloring composition has been dried (or fixed), the black coated object preferably has a value in lightness (or an L* value) equal to or smaller than 20 and a value in color saturation (or a C* value) equal to or smaller than 5, as measured with a color-difference meter, and a reflectance for an infrared ray having a wavelength of 1600 nm relative to that for a visible ray of light having a wavelength of 600 nm at a ratio equal to or larger than 2.5. These characteristics will be described later more specifically.

Coloring Composition

The present coloring composition may be oil-based (or organic solvent type), aqueous, or powdery such as powdery paint. In other words, the present coloring composition may be any composition that contains the infrared reflective pigment. Normally, it is suitable to contain the infrared reflective pigment of 0.1-30% relative to the resin binder's mass. If the infrared reflective pigment is blended in an excessively small amount, a coating (also including a printed matter hereinafter) presenting a black or deep color cannot be obtained, whereas if the infrared reflective pigment is blended in an excessively large amount, it may negatively affect the resin binder's physical properties, such as weather resistance, corrosion resistance, mechanical strength and the like.

The present coloring composition can also be used as a substitute for a conventional composition including carbon black to serve as an agent to adjust solid coating, metallic coating and the like in lightness, and thus provide a coating having a larger heat blocking effect than the conventional composition.

More specifically, the present coloring composition can be configured of the following components:

1) Resin binder: acrylic resin, alkyd resin, polyester resin, polyurethane resin, polyvinyl acetate resin, nitrocellulose resin, fluororesin, and the like.
2) Pigments and the like: the present infrared reflective pigment may be used together with the following coloring pigments, extenders, or dyes: phthalocyanine, quinacridone, isoindolinone, perylene, azo lake and other similar organic pigments, iron oxide, titanium oxide, aluminum pigment, pearl mica and other similar inorganic pigments and the like.
3) Additive: water, organic solvent, surfactant, curing agent, ultraviolet absorber, statistic electricity removing agent, thickener and the like. These additives may be blended in any amount, and are selectable within a conventionally known range, as desired.

The present coloring composition provides a coating that may be provided on an electro-painted or similar, undercoating and/or intermediate coating layer(s) and may underlie a topcoat layer. Thus providing an object with an undercoating layer and/or an intermediate coating layer will also be referred to as "applying a coloring composition to an object to be coated" or the like.

Infrared Reflective Pigment

The present infrared reflective pigment contained in the above coloring composition is characterized by having a structure including a metallic substrate, a metal oxide interference layer covering a surface of the metallic substrate, and metallic particles partially covering a surface of the metal oxide interference layer. In other words, the present infrared reflection method applying to an object a coloring composition containing an infrared reflective pigment having such a structure excellently effectively establishes both a black or deep colored appearance and infrared reflection. Furthermore, the present infrared reflective pigment provides a metallic effect, and hence a visually stereoscopic black coating, and is also significantly reflective for the ultraviolet range and accordingly, suitably used for cosmetic applications and the like requiring an ultraviolet blocking effect.

The present invention relates to an infrared reflection method as well as an infrared reflective pigment having such excellent characteristics. The present infrared reflective pigment has a structure, as will be described more specifically hereinafter.

Metallic Substrate

The present infrared reflective pigment has as a constituent thereof a metallic substrate being aluminum. Aluminum is preferable, as it has a high ability to reflect infrared radiation. The pigment having a substrate that is a metallic substrate can increase a heat blocking effect attributed to infrared reflection and also achieve a significant hiding effect. Such effects cannot be achieved when metal oxide is used as a substrate.

The metallic substrate can be produced: through atomization to be provided in the form of powder; by grinding a thin plate of metal by wet ball milling (the Hall method), dry ball milling, or the like; or the like. Furthermore, it can also be obtained by vapor-depositing a thin layer of metal on a film or the like, then peeling it off, and thereafter grinding it.

The metallic substrate suitably has an average particle size of approximately 2-300 $\mu$m, preferably approximately 5-100 $\mu$m. An average particle size less than 2 $\mu$m may provide insufficient infrared reflectance, whereas an average particle size exceeding 300 $\mu$m may result in a coated object having an unsatisfactory appearance. The average particle size can be obtained through laser diffraction.

Furthermore, the metallic substrate is suitably a metallic substrate having an average thickness of approximately 0.01-5 $\mu$m, preferably approximately 0.02-1 $\mu$m. An average thickness less than 0.01 $\mu$m may make it difficult to obtain a black or deep color, and an average thickness exceeding 5 $\mu$m may result in a coated object having an unsatisfactory appearance. The average thickness can be obtained by observing a coating in cross section and calculating its average value (of 100 samples or more).

The present metallic substrate is preferably flakey and, in particular, suitably has an average particle size/average thickness ratio of 5-1000, preferably 15-500, and preferably has a smooth and round surface.

Metal Oxide Interference Layer

The above metallic substrate has a surface covered with the present metal oxide interference layer, which is configured of a metal oxide of Si, namely silicon oxide. Significantly transparent metal oxides of, Si, are excellent in effectively enhancing an ability to reflect infrared radiation. Si oxide (silicon oxide) facilitates providing a dense interference layer. Such a metal oxide interference layer is such a layer that light externally incident on the layer and reflected at a surface of the metallic substrate and light externally incident on the layer and reflected at a surface of the layer interfere with each other to exhibit an interference effect of colors, and that also provides a function to reflect infrared radiation. The metal oxide interference layer and the metallic particles described later interact with each other to present a black or deep color.

Thus covering a surface of the metallic substrate with the metal oxide interference layer may be done in any method. For example, metal alkoxide may be hydrolyzed to cover the metallic substrate, i.e., a sol-gel method; a vaporized metal compound may be oxidized and precipitated in a fluidized bed including the metallic substrate, i.e., CVD; the metallic substrate may be dispersed in a metal salt solution and a neutralizer may be added thereto to precipitate a metal oxide on the metallic substrate, i.e., a wet process; and the like.

Furthermore, the metal oxide interference layer may directly cover the metallic substrate or may cover it with an underlying intermediate layer posed therebetween. Thus a metal oxide interference layer covering a surface of the metallic substrate with an underlying intermediate layer posed therebetween is also referred to in the present invention as "a metal oxide interference layer covering a surface of the metallic substrate."

Preferable underlying intermediate layers are for example aluminum oxide, molybdenum oxide, phosphate, a composite thereof and the like, and these underlying intermediate layers can be previously deposited on the metallic substrate to allow the metal oxide interference layer to be provided stably. As such, introducing such an underlying intermediate layer does not depart from the scope of the present invention.

The underlying intermediate layer allows the overlying metal oxide interference layer to be precipitated more uniformly. This allows the metal oxide interference layer to be uniform in thickness and an infrared reflective pigment to provide a better black or deep colored appearance and a better ability to reflect infrared radiation. Furthermore, an underlying intermediate layer containing molybdenum and/or phosphorus is satisfactorily anti-corrosive and thus also effectively prevents a processing solution and the metallic substrate from causing an abnormal reaction in the step of providing the metal oxide interference layer.

The molybdenum and/or phosphorus-containing underlying intermediate layer may be introduced on a surface of the metallic substrate in any method. Preferably, however, the metallic substrate and a solution containing a molybdenum compound and/or a phosphorus compound are agitated or kneaded in the form of a slurry or paste to form a molybdenum and/or phosphorus-containing hydrate film on a surface of the metallic substrate and the film is subsequently heated to provide an oxide layer, for example. The underlying intermediate layer can be provided in conventionally known methods specifically disclosed for example in Japanese Patent Laying-Open Nos. 09-328629 and 63-054475.

The underlying intermediate layer is formed with a molybdenum compound of peroxo-polymolybdate represented by a compositional formula: $Mo_xO_y \cdot mH_2O_2 \cdot nH_2O$, wherein x is 1 or 2, y is an integer of 2-5, and m and n are each any positive number, ammonium molybdate, molybdophosphoric acid or the like, for example. Peroxo-polymolybdate can be prepared by dissolving powdery metallic molybdenum, molybdenum oxide or the like in an aqueous solution of hydrogen peroxide (concentration: 5-40% by mass). These compounds are dissolved in methyl alcohol, ethyl alcohol, isopropyl alcohol, n-propyl alcohol, t-butyl alcohol, n-butyl alcohol, isobutyl alcohol, ethyl cellosolve, butyl cellosolve, propylene glycol monobutyl ether, dipropylene glycol monomethyl ether, propylene glycol monopropyl ether, acetone or a similar hydrophilic solvent to provide a processing solution. The processing solution may contain water.

The underlying intermediate layer is formed with the phosphorus compound of orthophosphoric acid, phosphorous acid, hypo-phosphorous acid, phosphinic acid, pyrophosphoric acid, polyphosphoric acid and the like, for example. These compounds are dissolved in methyl alcohol, ethyl alcohol, isopropyl alcohol, n-propyl alcohol, t-butyl alcohol, n-butyl alcohol, isobutyl alcohol, ethyl cellosolve, butyl cellosolve, propylene glycol monobutyl ether, dipropylene glycol monomethyl ether, propylene glycol monopropyl ether, acetone or a similar hydrophilic solvent to provide a processing solution. The processing solution may contain water.

The underlying intermediate layer suitably contains molybdenum and/or phosphorus in an amount of 0.01-3.0 parts by mass, still suitably 0.05-2.0 parts by mass relative to 100 parts by mass of the metallic substrate. Desirably the amount of molybdenum and/or phosphorus is varied with the specific surface area of the metallic substrate to be processed. It is preferable that for a metallic substrate having a large specific surface area, the amount of molybdenum and/or phosphorus be increased, whereas for a metallic substrate having a small specific surface area, the amount of molybdenum and/or phosphorus be decreased. Molybdenum and/or phosphorus having an amount equal to or larger than 0.01 parts by mass relative to 100 parts by mass of the metallic substrate allow/allows the metal oxide interference layer to be satisfactorily uniform in thickness and also formed while the metallic substrate has a satisfactory chemical stability, whereas molybdenum and/or phosphorus having an amount equal to or smaller than 3.0 parts by mass relative to 100 parts by mass of the metallic substrate prevent(s) the metallic substrate from having an impaired metallic shiny effect or similar color tone and from aggregation, and also maintain(s) satisfactory moisture resistance, adhesion, weather resistance and other similar physical coating properties.

The underlying intermediate layer preferably has a thickness falling within a range of 0.5-10 nm. The underlying intermediate layer having a thickness equal to or larger than 0.5 nm allows the metal oxide interference layer to be satisfactorily uniform in thickness and also formed while the metallic substrate has a satisfactory chemical stability, whereas the underlying intermediate layer having a thickness equal to or smaller than 10 nm prevents the metallic substrate from having an impaired metallic shiny effect or similar color tone and from aggregation, and also maintains satisfactory moisture resistance, adhesion, weather resistance and other similar physical coating properties.

Hereinafter, the metal oxide interference layer formed of silicon oxide is provided in a sol-gel method, as will be described hereinafter specifically by way of example.

Initially, a metallic substrate is dispersed in a water-soluble solvent such as exemplified below at item 1), and molybdic acid, phosphoric acid, or a condensate or salt thereof, or oxygenated water is added thereto and agitated/mixed together to provide an underlying intermediate layer on the metallic substrate. Subsequently, a solution containing a silicon compound such as exemplified below at item 2), and water and a basic or acidic catalyst such as indicated below at item 3) are added thereto and further agitated/mixed together, and a metal oxide interference layer formed of silicon oxide can be provided to cover the metallic substrate.

1) Examples of Water Soluble Solvent

methyl alcohol, ethyl alcohol, isopropyl alcohol, n-propyl alcohol, t-butyl alcohol, n-butyl alcohol, isobutyl alcohol, ethyl cellosolve, butyl cellosolve, propylene glycol monobutyl ether, dipropylene glycol monomethyl ether, propylene glycol monopropyl ether, acetone and the like.

2) Examples of Silicon Compound

methyl triethoxysilane, methyl trimethoxysilane, tetraethoxysilane, tetramethoxysilane, tetraisopropoxysilane and the like, and a condensate thereof, γ-aminopropyl triethoxysilane, N-2-aminoethyl-3-aminopropyl triethoxysilane, N-2-aminoethyl-3-aminopropylmethyl dimethoxysilane and the like.

Examples of Catalyst

aqua ammonia, ethylenediamine, monoethanolamine, diethanolamine, triethanolamine, triethylamine, piperazine, sodium hydroxide and other similar basic catalysts, or phosphoric acid, hydrochloric acid, sulfuric acid, nitric acid, phosphonic acid, octane phosphonic acid and other similar acidic catalysts.

The metal oxide interference layer has an optical thickness within a range of 30-110 nm. Herein, an "optical thickness" indicates a product of a "geometrical thickness" and an "index of refraction of the metal oxide interference layer", i.e., a "geometrical thickness" multiplied by an "index of refraction of the metal oxide interference layer". Such an optical thickness is preferably 70-100 nm.

A metal oxide interference layer having an optical thickness less than 30 nm results in insufficient light absorption for the visible light range, and so does a metal oxide interference layer having an optical thickness exceeding 110 nm, and in either case it is difficult to present a black or deep color. When the metal oxide interference layer is formed of silicon oxide, its preferable geometrical thickness will be a range of 48-69 nm as silicon oxide has an index of refraction of 1.45.

Note that the metal oxide interference layer's geometrical thickness can be obtained by observing it in cross section with a transmission electron microscope or a scanning electron microscope.

Metallic Particles

The present infrared reflective pigment has the above metal oxide interference layer having a surface partially covered with metallic particles. Importantly, the metallic particles cover the metal oxide interference layer's surface partially, in other words, the metallic particles cover the metal oxide interference layer's surface only at a portion, and covering the metal oxide interference layer's surface with the metallic particles entirely does not achieve the present invention's effect. This is believed because it is when light incident on the infrared reflective pigment and reflected at a surface of the metal oxide interference layer and light incident on the infrared reflective pigment and reflected at a surface of the metallic particles interfere with each other, that a visual effect of a black or deep color is first exhibited. In contrast, if the metal oxide interference layer has its surface covered with metallic particles entirely, only a function of the metallic particles to reflect infrared radiation is obtained and the visual effect of the black or deep color can no longer be exhibited.

Such metallic particles are configured of elements such as Al, Ti, Fe, Co, Ni, Cu, Zn, Ru, Rh, Pd, Ag, Sn, Pt, Au and the like by way of example. Among these, Ag, Cu, Ni, Sn are suitable, and inter alia, Ag is most preferable as it has a high ability to reflect infrared radiation.

While such metallic particles can be applied suitably by dispersing a metallic substrate having its surface covered with a metal oxide interference layer in a metal salt solution, and adding a reducing agent thereto to precipitate the metallic particles on a surface of the metal oxide interference layer, i.e., by electroless plating, the metallic particles may be provided through vacuum evaporation or a similar PVD.

Herein, electroless plating can be done with a specific agent including the compounds indicated below by way of example:

1) Metal Salt Solution

Water soluble metal salt including any of Al, Ti, Fe, Co, Ni, Cu, Zn, Ru, Rh, Pd, Ag, Sn, Pt, Au, for example. In this example, the water soluble metal salt is nitrate, nitrite, sulfate, oxalate, carbonate, chloride, acetate, lactate, sulfamate, fluoride, iodide, cyanide and the like, for example.

2) Reducing Agent

Hypo-phosphorous acid, formaldehyde, hydrogenated boron, dimethylamine borane, trimethylamine borane, hydrazine, glucose, tartaric acid, an alkaline metal salt thereof, and the like.

3) Complexing Agent

Succinic acid and other similar carboxylic acids, citric acid, tartaric acid and other similar oxycarboxylic acids, glycine, EDTA (ethylenediminetetraacetic acid), aminoacetic acid and other similar organic acids, and alkaline metal salts, ammonium salts and the like of these acids.

The electroless plating can be done specifically in a method as follows: Initially, a metallic substrate having a surface covered with a metal oxide interference layer is dispersed in water, alcohol, glycol ether or a similar water soluble solvent and an aqueous solution containing silver nitrate, nickel sulfate or a similar metal salt (see item 1) above) and a complexing agent such as citric acid (see item 3) above) is added thereto, and the dispersion is maintained while a temperature of 20°C-90°C is maintained, and formaldehyde or a similar reducing agent (see item 2) above) is added to precipitate metallic particles on a surface of the metal oxide interference layer partially to obtain the present infrared reflective pigment.

The present metallic particles are provided to cover a portion of a surface of the metal oxide interference layer, as described above. In other words, there is a portion uncovered with the metallic particles.

The metallic particles have an average particle size within a range of 10-50 nm, preferably 20-40 nm. Metallic particles having an average particle size larger or smaller than this range result in insufficient light absorption for the visible light range and a black or deep color can no longer be presented. Preferably, the metal oxide interference layer has a surface with the metallic particles spaced by 10 nm or smaller. The metallic particles spaced by a distance larger than 10 nm result in insufficient light absorption for the visible light range and a black or deep color can no longer be presented.

Note that such metallic particles' average particle size can be confirmed by observing the metallic particles in cross section with a transmission electron microscope (TEM). Preferably, the observation in cross section is done with the infrared reflective pigment's cross section FIB (focused ion beam)-processed, and preferably, a plurality thereof are observed and their average (an average of 100 samples or more) is obtained.

The present infrared reflective pigment is an infrared reflective pigment with a metal oxide interference layer having an optical thickness within a range of 30-110 nm and metallic particles having an average particle size within a range of 10-50 nm. Such a configuration allows a black or deep colored appearance and infrared reflection to be both established most suitably.

Note that suitably, such metallic particles are contained in an amount within a range of 5-50 parts by mass per 100 parts by mass of the metallic substrate. 5 parts by mass or smaller of metallic particles may make it difficult to provide a black or deep color, and so may more than 50 parts by mass of metallic particles. More preferably, the metallic particles are contained in an amount of 7-20 parts by mass.

Metallic Intermediate Layer

The present infrared reflective pigment may have a metallic intermediate layer disposed on the metal oxide interference layer and having a surface partially covered with the metallic particles. In other words, a metallic intermediate layer can be introduced between the metal oxide interference layer and the metallic particles and such a metallic intermediate layer does not provide departure from the scope of the present invention.

Such a metallic intermediate layer allows the metallic particles to be formed through electroless plating with such an excellent effect that their particle size and distribution are controllable. The metallic intermediate layer can be of Sn, Pd, Pt, Au or a similar metal or a compound thereof.

While the metallic intermediate layer may be provided for example by: hydrolyzing metal alkoxide in a sol-gel method for precipitation; adding alkali to a metal salt solution for neutralization and precipitation; or the like, the layer may be provided in different methods. When the sol-gel method is employed, conditions similar to those described above for the metal oxide interference layer can be adopted.

Note that when the metallic particles are provided through electroless plating, it is preferable that the metallic intermediate layer be provided by using a water soluble metal salt containing a metal to serve as the metallic intermediate layer.

Furthermore, the hydrolysis and precipitation can be done with a metal alkoxide of tetraethoxy tin for example and a colloid solution having the metal alkoxide dispersed therein can preferably be used. Furthermore, metal alkoxide can be hydrolyzed with a catalyst of aqua ammonia, ethylenediamine, monoethanolamine, diethanolamine, hydrazine, urea and the like for example.

Furthermore, the neutralization and precipitation can be done with a metal salt for example of tin chloride, tin fluoride and the like. Furthermore, the metal salt's neutralizer can be aqua ammonia, sodium hydroxide, monoethanolamine, diethanolamine and the like for example. Furthermore, a reaction solvent can be water, ethanol, isopropyl alcohol, methyl propylene glycol, butyl cellosolve and the like for example.

When the present metallic particles are provided through electroless plating using a water soluble metal salt, the metallic intermediate layer can be provided in a method used as a pretreatment for the electroless plating. The pretreatment for the electroless plating typically includes a catalyst (or catalyzing)-accelerator (or accelerating) method and a sensitizing-activating method, and either one of the methods may be used. Alternatively, the catalyst or the sensitizing may alone be employed.

The catalyst-accelerator method is performed as follows: a mixture solution containing Sn and any of Pd, Pt and Au is used as a catalyst and a metallic pigment with the metal oxide interference layer formed is immersed in the catalyst to adsorb a complex compound or the like of any of Pd, Pt and Au and Sn on a surface of the metallic pigment, and subsequently, sulfuric acid, hydrochloric acid or a similar acidic solution or sodium hydroxide, ammonia or a similar alkaline solution is used as an accelerator and therein the metallic pigment is immersed and Sn is removed to activate any of Pd, Pt and Au.

The sensitizing-activating method is performed as follows: An Sn solution is used as a sensitizing liquid and the metallic substrate with the metal oxide interference layer formed is immersed therein to adsorb Sn to a surface of the metallic substrate, and subsequently, a solution containing any of Pd, Pt, Au is used as an activating liquid to carry any of Pd, Pt, Au on the surface of the metallic substrate.

The sensitizing method is performed as follows: An Sn solution is used as a sensitizing liquid and the metallic pigment with the metal oxide interference layer formed is immersed therein to adsorb Sn to a surface of the metallic substrate to carry Sn on the surface of the metallic substrate.

The metallic intermediate layer provided in a method used as a pretreatment for the electroless plating can be obtained from a metal source implemented as a water soluble metal salt including any of Sn, Pd, Pt, Au. More specifically, the metal salt can be tin chloride, tin oxalate, tin sulfate, tin bromide, tin acetate, tin fluoroborate, tin fluoride, sodium stannate, potassium stannate, tin methanesulphonate, tin sulfide, tin silicofluoride, palladium chloride, palladium acetate, palladium bromide, palladium hydroxide, palladium nitrate, palladium oxide, palladium sulfate, gold bromide, gold chloride, platinum chloride, platinum oxide and the like, for example.

The method as described above allows a Sn, Pd, Pt, Au or similar catalyst layer to be carried as the metallic intermediate layer of the present invention. Subsequently, the metallic intermediate layer can have a surface electrolessly plated to have metallic particles thereon. When the metallic substrate having the metallic intermediate layer is immersed in an electroless plating solution, the metallic intermediate layer's catalytic activity allows a reducing agent in the plating solution to be oxidized on a surface of the metallic intermediate layer, when electrons are discharged and they reduce metal ions in the electroless plating solution, and a metal precipitates on a surface of the metallic intermediate layer and metallic particles are thus produced.

In the present invention, the metallic intermediate layer preferably has a thickness equal to or smaller than 30 nm. This allows the resultant infrared reflective pigment to have a better black or deep colored appearance and better infrared reflection performance. Still preferably, the metallic intermediate layer has a thickness within a range of 0.1-10 nm. The metallic intermediate layer's thickness can be confirmed for example as a layer of metal formed between the metal oxide interference layer and the metallic particles, as observed with a transmission electron microscope (TEM) at a high magnification of approximately 3 million times. Furthermore, local energy-dispersive x-ray spectroscopy (local EDS) can also be employed to confirm that an element is present. The metallic intermediate layer is formed typically by particles in aggregates forming a continuous layer.

Note that the metallic intermediate layer may uniformly or non-uniformly be precipitated on a surface of the metal oxide interference layer. Furthermore, for example even if the metallic intermediate layer is precipitated with a thickness too small to observe with a TEM, the metallic particles can be precipitated densely and uniformly.

Outermost Covering Layer

The present infrared reflective pigment can be configured to have an outermost covering layer at least on the metallic particles. Herein, the expression "at least on the metallic particles" means that the outermost covering layer can cover the metallic particles and can also cover the metal oxide interference layer (or the metallic intermediate layer if it is formed). Accordingly, when the outermost covering layer is provided, the present infrared reflective pigment can be provided in such a manner that the outermost covering layer covers the infrared reflective pigment's entire surface.

The outermost covering layer may be formed of resin or may be formed of metal oxide. Furthermore, it may be formed of a coupling agent. Hereinafter, the outermost covering layer of materials will be described more specifically.

1) Outermost Covering Layer Formed of Resin

The outermost covering layer formed of resin allows a coating having the infrared reflective pigment blended therein to be improved in moisture resistance, water resistance, weather resistance and the like, and hence achieve higher performance. Furthermore, the outermost covering layer of resin can fix metallic particles precipitated on the metal oxide interference layer, and thus allows agitation and kneading to be done without metallic particles peeled off and hence an impaired capability of providing a black or deep colored appearance or the like.

While the outermost covering layer of resin may be provided in any method, it can be provided for example as follows: an infrared reflective pigment (1-30 parts by mass) having a surface with the metallic particles thereon is dispersed in a non-polar solvent (100 parts by mass) and a monomer and a polymerization initiator are added thereto, and they are agitated together at approximately 60-150°C for 1 hour or more as they are heated to allow resin with the monomer polymerized to be precipitated as the outermost covering layer on a surface of the infrared reflective pigment.

The infrared reflective pigment is covered with resin suitably in an amount of 1-30 parts by mass, preferably 3-20 parts by mass relative to 100 parts by mass of the infrared reflective pigment (with the metallic particles carried thereby). Excessively small amounts of resin to cover the infrared reflective pigment cannot fix the metallic particles sufficiently, whereas excessively large amounts of resin to cover the infrared reflective pigment may result in a tendency to provide a coating impaired in appearance, lustemess and the like.

A variety of materials used to form the outermost covering layer is indicated below by way of example.

Examples of Nonpolar Solvent

mineral spirit, solvent naphtha, paraffin based solvent, isoparaffin based solvent, benzene, toluene, xylene and the like.

Examples of Monomer

While the monomer may be any monomer that is a compound having a polymerizable double bond, a compound having two or more polymerizable double bonds, a compound having both a functional group and a polymerizable double bond, a polymerizable compound having an alkyl group, a benzene nucleus or the like can be used together to adjust the resin's adhesion, hardness, crosslinking density and the like, as desired.

Examples of Compound Having Two or More Polymerizable Double Bonds

trimethylolpropane triacrylate, trimethylolpropane trimethacrylate, tetramethylol propane triacrylate, tetramethylolpropane tetraacrylate, tetramethylolpropane trimethacrylate, tetramethylolpropane tetramethacrylate, pentaerythritol triacrylate, pentaerythritol tetraacrylate, dipentaerythritol hexaacrylate, ditrimethylolpropane tetraacrylate, divinylbenzene, 1,4-butanediol diacrylate, 1,6-hexanediol diacrylate, 1,9-nonanediol diacrylate, neopentyl glycol diacrylate, tripropylene glycol diacrylate, tetraethylene glycol diacrylate and the like.

Examples of Polymerizable Compound Having Functional Group

acrylic acid, methacrylic acid, maleic acid, crotonic acid, itaconic acid, fumaric acid, 2-methacryloyloxyethyl acid phosphate, 2-dimethylaminoethyl methacrylate, 2-diethylaminoethyl acrylate, glycidyl methacrylate styrene, di-2-methacryloyloxyethyl acid phosphate, tri-2-methacryloyloxyethyl acid phosphate, 2-hydroxyethyl acrylate, 2-hydroxybutyl acrylate, $\alpha$-methylstyrene, vinyl toluene, methyl methacrylate, lauryl methacrylate, diallyl dibutyl phosphonosuccinate, epoxidized soybean oil, expoxidized polybutadiene and the like.

Examples of Polymerizable Compound Having Alkyl Group, Benzene Nucleus, or the Like

butyl acrylate, 2-ethylhexyl acrylate, lauryl acrylate, stearyl acrylate, cyclohexyl acrylate, 2-methoxyethyl acrylate, phenyl vinyl ketone, phenyl vinyl ether, divinylbenzene monoxide phenoxy ethyl acrylate, phenoxy-polyethylene glycol acrylate, 2-hydroxy-3-phenoxypropyl acrylate, 2-acryloyloxyethyl-2-hydroxyethyl phthalate, 2-acryloyloxyethylhexahydro phthalate, acrylonitrile, methacrylonitrile, vinyl acetate, vinyl propionate, polybutadiene, linseed oil, soybean oil, cyclohexene vinyl monoxide and the like.

Examples of Polymerization Initiator

benzoyl peroxide, lauroyl peroxide, isobutyl peroxide, methyl ethyl ketone peroxide and other similar peroxides, and azobisisobutyronitrile and other similar azo compounds, and the like.

2) Outermost Covering Layer of Metal Oxide

The present infrared reflective pigment that has an outermost covering layer disposed on the metallic particles and formed of a metal oxide containing at least one element selected from aluminum, silicon, cerium or the like allows a coating having the present infrared reflective pigment blended therein to have better moisture resistance, water resistance, weather resistance and the like, and hence achieve higher performance. Furthermore, thus covering with the metal oxide allows the metallic particles to be fixed, and thus allows agitation and kneading to be done without metallic particles peeled off and hence an impaired capability of providing a black or deep colored appearance or the like.

While such an outermost covering layer of metal oxide may be provided in any method, it can be provided suitably for example in a sol gel method, as follows: an infrared reflective pigment (1-30 parts by mass) having a surface with the metallic particles thereon is dispersed in a hydrophilic solvent (100 parts by mass) and a metal alkoxide containing aluminum, silicon, cerium or the like, a hydrolytic catalyst and water are added thereto to hydrolyze and condense the metal alkoxide to produce oxide particles and precipitate them on a surface of the infrared reflective pigment (i.e., on the metallic particles) to deposit a layer.

Furthermore, as another method, it is preferable that an infrared reflective pigment having a surface with the metallic particles thereon is added to a solution having aluminum nitrate, cerium acetate, cerium nitrate or the like dissolved therein and ammonia, triethanolamine or a similar neutralizer is added thereto, and they are agitated or kneaded as they are heated.

Such an outermost covering layer of metal oxide suitably has a thickness of 1-50 nm, preferably 5-20 nm. If the layer is excessively small in thickness, the metallic particles cannot be fixed sufficiently, whereas if the layer is excessively large in thickness, a tendency may be indicated that a coating impaired in appearance, lusterness, and the like is provided.

A variety of materials used to form the outermost covering layer is indicated below by way of example.

Examples of Hydrophilic Solvent

methyl alcohol, ethyl alcohol, isopropyl alcohol, n-propyl alcohol, t-butyl alcohol, n-butyl alcohol, isobutyl alcohol, ethyl cellosolve, butyl cellosolve, propylene glycol monobutyl ether, dipropylene glycol monomethyl ether, propylene glycol monopropyl ether, acetone and the like.

Examples of Metal Alkoxide

tetraethoxysilane and a condensate thereof, tetraisopropoxysilane, triisopropoxy aluminum, tetraethoxy cerium and the like.

Examples of Hydrolytic Catalyst

ammonia, triethylamine, piperazine, triethanolamine, monoethanolamine, dimetylaminoethanol, ethylenediamine, phosphoric acid, nitric acid, acetic acid, and the like.

3) Outermost Covering Layer Formed of Coupling Agent

The present infrared reflective pigment with an outermost covering layer disposed on the metallic particles that is formed of a coupling agent containing silicon and/or titanium allows a coating having the infrared reflective pigment blended therein to have better performance (adhesion, moisture resistance, water resistance, weather resistance and the like). While the outermost covering layer formed of the coupling agent may be provided in any method, it can be provided for example as follows: an infrared reflective pigment having a surface with the metallic particles thereon is dispersed in a hydrophilic solvent and the coupling agent and water are added thereto; the infrared reflective pigment is mixed with a solvent, water and the coupling agent and kneaded and agitated together; and the like, by way of example.

The coupling agent is suitably added in an amount of 0.1-5 parts by mass, preferably 0.3-2 parts by mass relative to 100 parts by mass of the infrared reflective pigment (with the metallic particles carried thereby). If the coupling agent is added in excessively small amounts, sufficiently effectively improved coating performance cannot be obtained, whereas if the coupling agent is added in excessively large amounts, a tendency may be indicated that the infrared reflective pigment aggregates over time, a coating impaired in appearance, lusterness, and the like is provided, or the like.

A variety of coupling agents used to form the outermost covering layer is indicated below by way of example.

Examples of Titanate Coupling Agent

tetrabutoxy titanium, tetraisopropoxy titanium, tetraethoxy titanium, tetrakis (2-ethylhexoxy)titanium and a condensate thereof, tetrastearoxy titanium, diisopropoxy bis (acetyl acetonate)titanium, dibutoxy bis (triethanolaminate)titanium, dihydroxy bis (lactate)titanium, isopropyl tri(N-aminoethylaminoethyl )titanate, isopropyl tris (dioctyl pyrophosphate)titanate and the like.

Examples of Silane Coupling Agent

methyl triethoxysilane, methyl trimethoxysilane, methyl diethoxysilane, hexyl triethoxysilane, octyl triethoxysilane, decyl triethoxysilane, octadecyl triethoxysilane, phenyl triethoxysilane, diphenyl diethoxysilane, nonylphenyl triethoxysilane, hexamethyldisilazane, N,O-bis (trimethylsilyl)acetamido, $\gamma$-aminopropyl triethoxysilane, N-2-aminoethyl-3-aminopropyl triethoxysilane, N-2-aminoethyl-3-aminopropylmethyl dimethoxysilane, 3-glycidoxypropyl trimethoxysilane, 3-(methacryloyloxy)propylmethyl dimethoxysilane and the like.

Characteristics and the like of Infrared Reflective Pigment

The present infrared reflective pigment and black coated object have the following characteristics:

More specifically, the present infrared reflective pigment has an optical interference effect and/or an interference color derived from the structure of the pigment per se, and the pigment's particles per se develop a black or deep color and a coating containing the pigment accordingly presents a black or deep colored appearance, or the pigment's particles aggregate and their complementary color effect allows the coating containing the pigments to present a black or deep colored appearance.

The present black coated object that has on a surface thereof a coating containing such an infrared reflective pigment as described above can have the following characteristics under the following conditions: More specifically, when a coloring composition containing 10 parts by mass of the infrared reflective pigment and 100 parts by mass of a resin binder is applied to an object by a thickness of 50 $\mu$m to obtain a black coated object, the black coated object characteristically has a value in lightness (or an L* value) equal to or smaller than 20 and a value in color saturation (or a C* value) equal to or smaller than 5, as measured with a color-difference meter, and a reflectance for an infrared ray having a wavelength of 1600 nm relative to that for a visible ray of light having a wavelength of 600 nm at a ratio equal to or larger than 2.5.

Generally, an interference layer, which corresponds to the present metal oxide interference layer, has a thickness (a geometrical thickness, $d$ nm) and an index of refraction ($n$) and provides an interference color having a wavelength ($\lambda$ nm), in a relationship represented by the following expression:

$$2nd = (2\mathrm{m} + 1)\lambda/2,$$

wherein m represents an integer equal to or larger than zero, and a range allowing m = 0 and $350 \le \lambda \le 380$, i.e., $87.5 \le nd \le 95$, allows the present infrared reflective pigment to develop black color by an optical interference effect, wherein $nd$ indicates an optical thickness. This range corresponds to a gap between a color-developing wavelength range of a 0th-order interference color of the metal oxide interference layer and that of a first-order interference color thereof and thus there is no overlap of interference lights different in order, and it is thus believed that black color is provided.

Furthermore, if the optical thickness does not fall within $87.5 \le nd \le 95$, an infrared reflective pigment presenting a black or deep color having a color saturation (C* value) equal to or smaller than 10 is obtained as the infrared reflective pigment's individual particles having interference colors have a complementary color effect.

Thus, while preferably the present infrared reflective pigment per se presents black color, two or more types of infrared reflective pigments having a relationship complementary in color to each other can also be used to present a black appearance. For example, infrared reflective pigments configured in accordance with the present invention that have mixed together pigment particles developing brown color and those developing deep blue color can provide a group of pigments presenting a black color having a color saturation (C* value) equal to or smaller than 5. It should be noted, however, that to provide the pigment with a lightness (L* value) equal to or smaller than 20, it is preferable that the metal oxide interference layer have an optical thickness (*nd*) of 70-100 nm.

It is desirable that the present infrared reflective pigment or black coated object as measured with a color-difference meter have a lightness (L* value) equal to or smaller than 20 and a color saturation (C* value) equal to or smaller than 5. A pigment having a lightness (L* value) or a color saturation (C* value) exceeding these ranges cannot present a black appearance, and a black coated object as intended cannot be obtained. Note that the lightness and the color saturation may have any lower limit. In view of a measurement instrument's detection precision, however, the lightness has a lower limit of 0.1 or larger and the color saturation has a lower limit of 0.1 or larger. It is also a matter of course that the above conditions may be adjusted to obtain deep colors.

Note that the color-difference meter refers to a chromatic color-difference meter of a diffused illumination and vertical photoreception system, and specifically, it is exemplified by Chroma Meters CR-400™ or CR-300™ available from Konica Minolta Sensing, Inc. Furthermore, lightness (L* value) indicates lightness in the L*a*b* color system standardized in 1976 by Commission Internationale de l'Éclairage (CIE) and also standardized by JIS Z8729. Furthermore, color saturation (C* value) is an index of color saturation calculated from chromaticity a* value and b* value in the L*a*b* color system by the following expression:

$$C* = (a*^2 + b*^2)^{1/2}$$

Note that when such lightness and color saturation are measured, the coloring composition has a composition and other specific conditions, as will be described hereinafter in detail in describing a condition for measuring a ratio in reflectance, as below.

Preferably, the present infrared reflective pigment (or black coated object) has a reflectance for an infrared ray having a wavelength of 1600 nm relative to that for a visible ray of light having a wavelength of 600 nm at a ratio equal to or larger than 2.5. Herein, a reflectance for an infrared ray having a wavelength of 1600 nm and that for a visible ray of light having a wavelength of 600 nm can be measured with a multipurpose spectrophotometer. When the ratio is smaller than 2.5, sufficient thermal insulation property may not be achieved. The ratio's upper limit is not limited to any particular value. In view of a measurement instrument's detection precision, however, it is 20 or smaller.

When the multipurpose spectrophotometer is used, a ratio of a reflectance for an infrared ray having a wavelength of 1600 nm relative to that for a visible ray of light having a wavelength of 600 nm can be measured in the following method.

1) Preparing Coloring Composition

Relative to 10 parts by mass of the present infrared reflective pigment, 100 parts by mass of a cold dry acrylic resin binder available from NIPPONPAINT Co., Ltd. under the trademark of Nippe Acryl Autoclear™ is added as a resin binder, and they are agitated and thus mixed together uniformly to prepare a coloring composition.

2) Preparing Black Coated Object (or Coating)

The coloring composition obtained above at item 1) is applied to an object, which is art paper, using a 225 μm (9mil)-doctor blade to provide a black coated object (or coating) (in this case, when a base or the art paper is insufficiently hidden, the infrared reflective pigment is blended above at item 1) in an increased amount to prepare a black coated object completely hiding the base.

3) Measuring Distribution in Spectrophotometry

How the light reflected by the black coated object (or coating) obtained as described above at item 2) is distributed in spectrophotometry is measured in a reflection measurement mode with an ultraviolet, visible and near infrared spectrophotometer V-570™ produced by JASCO Corporation. A spectrophotometric curve is obtained and reflectance is read on the curve at wavelengths of 600 nm and 1600 nm, and a ratio of a reflectance for an infrared ray having a wavelength of 1600 nm relative to that for a visible ray of light having a wavelength of 600 nm is calculated.

Examples

Hereinafter the present invention will be described more specifically with reference to examples. The present invention however is not limited thereto.

Example 1 of Present Invention

3 g of oxygenated water containing 30% by mass of hydrogen peroxide was prepared and 0.3 g of powdery metallic molybdenum was added thereto little by little and thus reacted to provide a solution which was in turn dissolved in 500 g of isopropyl alcohol (hereinafter "IPA").

Subsequently, in the IPA solution, 40 g of a commercially available pasted aluminum pigment (produced by Toyo Aluminium K.K. under the trademark of 5422NS™ - solid content (flakey aluminum): 75% by mass, average particle size: 19 μm, and average thickness: 1 μm (i.e., 30 g as flakey aluminum)) was added as a metallic substrate, and they were agitated and mixed together at 75°C for one hour to obtain a slurry to thus provide the metallic substrate or flakey aluminum at a surface thereof with an underlying intermediate layer of molybdenum oxide.

Then, aqua ammonia and 80 g of water were added to the slurry to adjust the slurry's pH to have a value of 10.0. 16g of tetraethoxysilane dissolved in 40 g of IPA was gradually dropped to the slurry adjusted in pH, and they were further agitated and mixed together at 75°C for 2 hours. Subsequently, the slurry was filtered for solid-liquid separation to provide the metallic substrate (more specifically, the underlying intermediate layer) at a surface thereof with a metal oxide interference layer implemented as a layer of amorphous silicon oxide (hereinafter this intermediate product will be referred to as a "silicon oxide-covered metallic substrate" for the sake of convenience).

Subsequently, 10 g of the silicon oxide-covered metallic substrate thus obtained was added to 300 g of an aqueous solution containing 40 g of tin chloride and 2 g of hydrochloric acid and was dispersed therein at 30°C for 1 hour, and thereafter again subjected to solid-liquid separation and also washed with water to cover a surface of the silicon oxide-covered metallic substrate with a metallic intermediate layer of tin (hereinafter this intermediate product will be referred to as a "metallic intermediate layer-covered metallic substrate" for the sake of convenience).

Subsequently, the metallic intermediate layer-covered metallic substrate thus obtained was dispersed in 800 g of an electroless silver plating liquid containing 3g of silver nitrate, 2g of formaldehyde and 10 g of aqua ammonia and was held at 30°C for 1 hour to obtain metallic particles of silver partially covering a surface of the metallic intermediate layer (hereinafter this intermediate product will be referred to as a "metallic particle-covered metallic substrate" for the sake of convenience).

Subsequently, the metallic particle-covered metallic substrate thus obtained was subjected to solid-liquid separation and dried to obtain the present infrared reflective pigment. The infrared reflective pigment's metal oxide interference layer and metallic particles were observed with a transmission electron microscope. The metal oxide interference layer had a geometrical thickness $d$ of 64 nm. Silicon oxide has an index of refraction of 1.45, and therefrom the metal oxide interference layer's optical thickness was calculated to be 93 nm. The metallic particles had an average particle size of 20 nm, and it has been confirmed that they cover a surface of the metal oxide interference layer (more precisely, the metallic intermediate layer) partially.

Then, art paper was prepared as an object to be coated, and a coloring composition containing the infrared reflective pigment obtained as described above was applied thereto to obtain a black coated object and thus perform the present infrared reflection method.

The coloring composition had a composition containing relative to 10 parts by mass of the infrared reflective pigment 100 parts by mass of a cold dry acrylic resin binder available from NIPPONPAINT Co., Ltd. under the trademark of Nippe Acryl Autoclear™ as a resin binder, and the coloring composition was applied to the object to have a thickness of 50 μm.

A black coated object was thus obtained and its lightness (L* value), color saturation (C* value) and ratio of a reflectance for an infrared ray having a wavelength of 1600 nm relative to that for a visible ray of light having a wavelength of 600 nm with reference to the spectrophotometric curve of light reflected thereby (see Fig. 1) were obtained in the aforementioned methods, respectively, and a result was obtained as follows: Note that Fig. 1 has an axis of ordinates representing reflectance (%R) and an axis of abscissas representing wavelength (nm) and indicates that example 1 of the present invention, as compared with a comparative example 2, is significantly increased in reflectance for an infrared range (wavelength: 1000 nm or larger).
lightness (L* value): 16
color saturation (C* value): 4.2
ratio of a reflectance for an infrared ray having a wavelength of 1600 nm relative to that for a visible ray of light having a wavelength of 600 nm: 3.4

As is apparent from the above result, the black coated object presented a black appearance and also reflected infrared radiation efficiently.

Example 2 of Present Invention

In accordance with the present invention an infrared reflective pigment was obtained under the same conditions as example 1 of the present invention except that tetraethoxysilane was added in an amount of 17g. This infrared reflective pigment is referred to as an "infrared reflective pigment A".

Furthermore in accordance with the present invention an infrared reflective pigment was obtained under the same conditions as example 1 of the present invention except that tetraethoxysilane was added in an amount of 14g. This infrared reflective pigment is referred to as an "infrared reflective pigment B".

A black coated object was obtained similarly as done in example 1 of the present invention except that infrared reflective pigments A and B were mixed together at a ratio in mass of 1:1, and its lightness (L* value), color saturation (C* value) and ratio of a reflectance for an infrared ray having a wavelength of 1600 nm relative to that for a visible ray of light having a wavelength of 600 nm were obtained. A result was obtained as follows:

lightness (L* value): 17
color saturation (C* value): 4.5
ratio of a reflectance for an infrared ray having a wavelength of 1600 nm relative to that for a visible ray of light having a wavelength of 600 nm: 3.3

As is apparent from the above result, the black coated object, as well as that of example 1 of the present invention, presented a black appearance and also reflected infrared radiation efficiently.

Note that infrared reflective pigments A and B had their respective metal oxide interference layers and metallic particles measured in thickness and average particle size, respectively, with a transmission electron microscope, and the following result was obtained.

Infrared Reflective Pigment A

Metal oxide interference layer's geometrical thickness: 68 nm (optical thickness: 99 nm)
Metallic particles' average particle size: 20 nm
Infrared Reflective Pigment B
Metal oxide interference layer's geometrical thickness: 56 nm (optical thickness: 81 nm)
Metallic particles' average particle size: 20 nm

Example 3 - Comparative example 0

3 g of oxygenated water containing 30% by mass of hydrogen peroxide was prepared and 0.3 g of powdery metallic molybdenum was added thereto little by little and thus reacted to provide a solution which was in turn dissolved in 500 g of IPA.

Subsequently, in the IPA solution, 40 g of the same, commercially available pasted aluminum pigment as used in example 1 of the present invention as a metallic substrate (i.e., 30 g as flakey aluminum) was added as a metallic substrate, and agitated and mixed together at 75°C for one hour to obtain a slurry to thus provide the metallic substrate or flakey aluminum at a surface thereof with an underlying intermediate layer of molybdenum oxide.

Then, 3 g of dibutoxybis(triethanolaminate) titanium and 10 g of water were added to the slurry and they were agitated at 50°C for 30 minutes. Subsequently, 21 g of tetraisopropoxytitanium dissolved in 40 g of IPA was dropped little by little into the slurry and they were further agitated and mixed together at 75°C for 2 hours. Subsequently, the slurry was filtered for solid-liquid separation to provide the metallic substrate (or underlying intermediate layer) at a surface thereof with a metal oxide interference layer implemented as a layer of amorphous titanium oxide (hereinafter this intermediate product will be referred to as a "titanium oxide-covered metallic substrate" for the sake of convenience).

Subsequently, 10 g of the titanium oxide-covered metallic substrate thus obtained was added to 300 g of an aqueous solution containing 40 g of tin chloride and 2 g of hydrochloric acid and was dispersed therein at 30°C for 1 hour, and thereafter again subjected to solid-liquid separation and also washed with water to cover a surface of the titanium oxide-covered metallic substrate with a metallic intermediate layer of tin (hereinafter this intermediate product will be referred to as a "metallic intermediate layer-covered metallic substrate" for the sake of convenience).

Subsequently, the metallic intermediate layer-covered metallic substrate thus obtained was dispersed in 800 g of an electroless silver plating liquid containing 3g of silver nitrate, 2g of formaldehyde and 10 g of aqua ammonia and was held at 30°C for 1 hour to obtain metallic particles of silver partially covering a surface of the metallic intermediate layer (hereinafter this intermediate product will be referred to as a "metallic particle-covered metallic substrate" for the sake of convenience).

Subsequently, the metallic particle-covered metallic substrate thus obtained was subjected to solid-liquid separation and dried to obtain the present infrared reflective pigment. The infrared reflective pigment's metal oxide interference layer and metallic particles were observed with a transmission electron microscope. The metal oxide interference layer had a geometrical thickness $d$ of 35 nm. Titanium oxide (anatase) has an index of refraction of 2.52, and therefrom the metal oxide interference layer's optical thickness was calculated to be 88 nm. The metallic particles had an average particle size of 30 nm, and it has been confirmed that they cover a surface of the metal oxide interference layer (more precisely, the metallic intermediate layer) partially.

Then, art paper was prepared as an object to be coated, and a coloring composition containing the infrared reflective pigment obtained as described above was applied thereto to obtain a black coated object and thus perform the present infrared reflection method.

The coloring composition had a composition containing relative to 10 parts by mass of the infrared reflective pigment 100 parts by mass of a cold dry acrylic resin binder available from NIPPONPAINT Co., Ltd. under the trademark of Nippe Acryl Autoclear™ as a resin binder, and the coloring composition was applied to the object to have a thickness of 50 $\mu$m.

A black coated object was thus obtained and its lightness (L* value), color saturation (C* value) and ratio of a reflectance for an infrared ray having a wavelength of 1600 nm relative to that for a visible ray of light having a wavelength of 600 nm with reference to the spectrophotometric curve of light reflected thereby were obtained in the aforementioned methods, respectively, and a result was obtained as follows:

lightness (L* value):15
color saturation (C* value):3.5
ratio of a reflectance for an infrared ray having a wavelength of 1600 nm relative to that for a visible ray of light having a wavelength of 600 nm: 2.9

As is apparent from the above result, this black coated object presented a black appearance and also reflected infrared radiation efficiently.

Comparative Example 1

3 g of oxygenated water containing 30% by mass of hydrogen peroxide was prepared and 0.3 g of powdery metallic molybdenum was added thereto little by little and thus reacted to provide a solution which was in turn dissolved in 500 g of IPA.

Then, in place of the metallic substrate of example 1 of the present invention, 30g of a commercially available flakey alumina (produced by KINSEI MATEC CO.,LTD. under the trademark of YF10050™ - solid content: 100% by mass, average particle size: 10 μm, and average thickness: 1 μm) was added as a substrate to the aforementioned IPA solution and agitated and mixed together at 75°C for one hour to obtain a slurry to thus provide a layer of molybdenum oxide on the flakey alumina.

Then, aqua ammonia and 80 g of water were added to the slurry to adjust the slurry's pH to have a value of 10.0. 16g of tetraethoxysilane dissolved in 40 g of IPA was gradually dropped to the slurry adjusted in pH, and they were further agitated and mixed together at 75°C for 2 hours. Subsequently, the slurry was filtered for solid-liquid separation to provide the flakey alumina (or molybdenum oxide layer) at a surface thereof with an amorphous silicon oxide interference layer corresponding to the metal oxide interference layer of the present invention (hereinafter this intermediate product will be referred to as a "silicon oxide-covered flakey alumina" for the sake of convenience).

Subsequently, 10 g of the silicon oxide-covered flakey alumina thus obtained was added to 300 g of an aqueous solution containing 40 g of tin chloride and 2 g of hydrochloric acid and was dispersed therein at 30°C for 1 hour, and thereafter again subjected to solid-liquid separation and also washed with water to cover a surface of the silicon oxide-covered flakey alumina with a layer of tin corresponding to the metallic intermediate layer of the present invention (hereinafter this intermediate product will be referred to as a "metallic intermediate layer-covered flakey alumina" for the sake of convenience).

Subsequently, the metallic intermediate layer-covered flakey alumina thus obtained was dispersed in 800 g of an electroless silver plating liquid containing 3g of silver nitrate, 2g of formaldehyde and 10 g of aqua ammonia and was held at 30°C for 1 hour to obtain metallic particles of silver partially covering a surface of the metallic intermediate layer (hereinafter this intermediate product will be referred to as a "metallic particle-covered flakey alumina" for the sake of convenience).

Subsequently, the metallic particle-covered flakey alumina thus obtained was subjected to solid-liquid separation and dried to obtain a pigment of a comparative example having a substrate of flakey alumina.

Then, except that this pigment was used, a coated object was obtained similarly as done in example 1 of the present invention, and its lightness (L* value), color saturation (C* value) and ratio of a reflectance for an infrared ray having a wavelength of 1600 nm relative to that for a visible ray of light having a wavelength of 600 nm with reference to the spectrophotometric curve of light reflected thereby were obtained. A result was obtained as follows:

> lightness (L* value): 19
> color saturation (C* value): 1.9
> ratio of a reflectance for an infrared ray having a wavelength of 1600 nm relative to that for a visible ray of light having a wavelength of 600 nm: 1.2

As is apparent from the above result, this coated object did not present a sufficiently black appearance nor provided sufficient infrared reflection. It has thus been confirmed that it is difficult to establish both a black appearance and infrared reflection without employing an infrared reflective pigment configured as done in the present invention.

Comparative Example 2

A black coated object was obtained similarly as done in example 1 of the present invention except that the below indicated blending was used to produce a coloring composition (or coating) and that this coloring composition was used, and the black coated object's lightness (L* value), color saturation (C* value) and ratio of a reflectance for an infrared ray having a wavelength of 1600 nm relative to that for a visible ray of light having a wavelength of 600 nm with reference to the spectrophotometric curve of light reflected thereby (see Fig. 1) were obtained. A result was obtained as follows:

Coloring Composition

> aluminum pigment (produced by Toyo Aluminium K.K. under the trademark of 5422NS™ used in example 1 of the present invention as a metallic substrate): 10 parts by mass
> carbon black (produced by Mitsubishi Chemical Corporation under the trademark of HCF #2650™): 1.5 parts by mass
> resin binder (produced by NIPPONPAINT Co., Ltd. under the trademark of Nippe Acryl Autoclear™): 100 parts by mass

Physical Properties

> lightness (L* value): 16
> color saturation (C* value): 2.1
> ratio of a reflectance for an infrared ray having a wavelength of 1600 nm relative to that for a visible ray of light having a wavelength of 600 nm: 1.8

As is apparent from the above result, while this black coated object did present a black appearance, it was unable to provide infrared reflection. It has thus been confirmed that it is difficult to establish both a black appearance and infrared reflection without employing an infrared reflective pigment configured as done in the present invention.

Comparative Example 3

A black coated object was obtained similarly as done in example 1 of the present invention except that the below indicated blending was used to produce a coloring composition (or coating) and that this coloring composition was used, and the black coated object's lightness (L* value), color saturation (C* value) and ratio of a reflectance for an infrared ray having a wavelength of 1600 nm relative to that for a visible ray of light having a wavelength of 600 nm with reference to the spectrophotometric curve of light reflected thereby were obtained. A result was obtained as follows:

Coloring Composition

aluminum pigment (produced by Toyo Aluminium K.K. under the trademark of 5422NS™ used in example 1 of the present invention as a metallic substrate): 10 parts by mass
perylene black (produced by BASF Japan Ltd under the trademark of Paliogen Black S 0084™): 1.5 parts by weight
resin binder (produced by NIPPONPAINT Co., Ltd. under the trademark of Nippe Acryl Autoclear™): 100 parts by mass

Physical Properties

lightness (L* value): 25
color saturation (C* value): 8.9
ratio of a reflectance for an infrared ray having a wavelength of 1600 nm relative to that for a visible ray of light having a wavelength of 600 nm: 1.7

As is apparent from the above result, while this black coated object did present a black appearance, it was unable to provide infrared reflection. It has thus been confirmed that it is difficult to establish both a black appearance and infrared reflection without employing an infrared reflective pigment configured as done in the present invention.

While the present invention has been described in embodiments and examples, combining the embodiments and examples in configuration as appropriate is also originally intended.

It should be understood that the embodiments and examples disclosed herein are illustrative and non-restrictive in any respect. The scope of the present invention is defined by the terms of the claims, rather than the description above, and is intended to include any modifications within the scope and meaning equivalent to the terms of the claims.

**Claims**

1.  An infrared reflection method comprising the steps of:

    preparing an object to be coated; and
    applying a coloring composition containing an infrared reflective pigment to said object to obtain a black coated object, wherein said infrared reflective pigment has a structure including a metallic substrate, a metal oxide interference layer covering a surface of said metallic substrate, and metallic particles partially covering a surface of said metal oxide interference layer, said metal oxide interference layer has an optical thickness within a range of 30-110 nm, said metallic particles have an average particle size within a range of 10-50 nm, said metallic substrate is aluminum, and said metal oxide interference layer is formed of silicon oxide.

2.  The infrared reflection method according to claim 1, wherein said infrared reflective pigment has said metal oxide interference layer underlying a metallic intermediate layer having a surface partially covered with said metallic particles.

3.  The infrared reflection method according to claim 1, wherein said infrared reflective pigment presents black color.

4.  The infrared reflection method according to claim 1, wherein said infrared reflective pigment is formed of two or more types of pigments complementary in color.

5.  The infrared reflection method according to claim 1, wherein when said coloring composition contains 10 parts by mass of said infrared reflective pigment and 100 parts by mass of a resin binder and is applied to said object to have a thickness of 50 μm to provide a black coated object, said black coated object has a value in lightness (or an L* value) equal to or smaller than 20 and a value in color saturation (or a C* value) equal to or smaller than 5, as measured with a color-difference meter, and a reflectance for an infrared ray having a wavelength of 1600 nm relative to that for a visible ray of light having a wavelength of 600 nm at a ratio equal to or larger than 2.5.

**6.** An infrared reflective pigment used in the infrared reflection method according to claim 1.


**Patentansprüche**

**1.** Infrarot-Reflexionsverfahren, das folgende Schritte aufweist:

ein Bereitstellen eines zu beschichtenden Objekts ; und
ein Aufbringen einer Farbzusammensetzung, die ein Infrarot-reflektierendes Pigment enthält, auf dem Objekt, um ein schwarz beschichtetes Objekt zu erhalten, wobei das Infrarot- reflektierende Pigment eine Struktur, die ein metallisches Substrat aufweist, eine Metalloxid-Interferenzschicht, die eine Oberfläche des metallischen Substrats bedeckt, und metallische Partikel hat, die eine Oberfläche der Metalloxid-Interferenzschicht teilweise bedecken, wobei die Metalloxid-Interferenzschicht eine optische Dicke innerhalb eines Bereichs von 30-110 nm aufweist, wobei die metallischen Partikel eine durchschnittliche Partikelgröße innerhalb eines Bereichs von 10-50 nm haben, wobei das metallische Substrat Aluminium ist, und die Metalloxid-Interferenzschicht aus Siliziumoxid gebildet ist.

**2.** Infrarot-Reflexionsverfahren nach Anspruch 1, wobei das Infrarot-reflektierende Pigment die Metalloxid- Interferenzschicht einer metallischen Zwischenschicht unterliegend hat, die eine Oberfläche hat, die teilweise mit den metallischen Partikeln bedeckt ist.

**3.** Infrarot-Reflexionsverfahren nach Anspruch 1, wobei das Infrarot-reflektierende Pigment eine schwarze Farbe präsentiert.

**4.** Infrarot-Reflexionsverfahren nach Anspruch 1, wobei das Infrarot-reflektierende Pigment aus zwei oder mehr Typen von Pigmenten gebildet ist, die in der Farbe komplementär sind.

**5.** Infrarot-Reflexionsverfahren nach Anspruch 1, wobei, wenn die Farbzusammensetzung 10 Massenteile des Infrarot-reflektierenden Pigments und 100 Massenteile eines Harz-Binders enthält und auf das Objekt aufgebracht ist, so dass sie eine Dicke von 50 μm hat, um ein schwarz beschichtetes Objekt vorzusehen, das schwarz beschichtete Objekt einen Wert in der Helligkeit (oder einen L *-Wert) gleich oder kleiner als 20 und einen Wert in der Farbsättigung (oder einen C *-Wert) gleich oder kleiner als 5, gemessen mit ein Farbdifferenzmessgerät, und ein Reflexionsvermögen für einen Infrarotstrahl mit einer Wellenlänge von 1600 nm bezogen auf dasjenige für einen sichtbaren Lichtstrahl mit einer Wellenlänge von 600 nm mit einem Verhältnis gleich oder größer als 2,5 hat.

**6.** Infrarot- reflektierendes Pigment, welches bei dem Infrarot-Reflexionsverfahren nach Anspruch 1 verwendet wird.


**Revendications**

**1.** Procédé de réflexion de lumière infrarouge comportant les étapes comprenant le fait de :

préparer un objet à recouvrir ; et
appliquer une composition colorante contenant un pigment réflecteur de la lumière infrarouge sur ledit objet afin d'obtenir un objet recouvert de noir, dans lequel ledit pigment réflecteur de lumière infrarouge possède une structure incluant un substrat métallique, une couche d'interférence d'oxyde métallique recouvrant une surface dudit substrat métallique, et des particules métalliques recouvrant partiellement une surface de ladite couche d'interférence d'oxyde métallique, ladite couche d'interférence d'oxyde métallique présente une épaisseur optique se situant dans les limites d'une plage de 30 à 110 nm, lesdites particules métalliques présentent une dimension de particule moyenne se situant dans les limites d'une plage de 10 à 50 nm, ledit substrat métallique est de l'aluminium et ladite couche d'interférence d'oxyde métallique est constituée d'oxyde de silicium.

**2.** Procédé de réflexion de lumière infrarouge selon la revendication 1, dans lequel ledit pigment réflecteur de lumière infrarouge présente ladite couche d'interférence d'oxyde métallique située au-dessous d'une couche métallique intermédiaire ayant une surface partiellement recouverte desdites particules métalliques.

**3.** Procédé de réflexion de lumière infrarouge selon la revendication 1, dans lequel ledit pigment réflecteur de lumière infrarouge présente une couleur noire.

**4.** Procédé de réflexion de lumière infrarouge selon la revendication 1, dans lequel ledit pigment réflecteur de lumière infrarouge est constitué de deux, ou plus, types de pigments complémentaires en couleur.

**5.** Procédé de réflexion de lumière infrarouge selon la revendication 1, dans lequel, lorsque ladite composition colorante contient 10 parties en masse dudit pigment réflecteur de lumière infrarouge et 100 parties en masse d'un liant de résine et est appliquée sur ledit objet pour présenter une épaisseur de 50

μm afin de fournir un objet recouvert de noir, ledit objet recouvert de noir présente une valeur de luminance (ou valeur L*) égale à, ou plus petite que, 20 et une valeur en saturation de couleur (ou valeur C*) égale à, ou plus petite que, 5, telle que mesurée avec un appareil de mesure de différence de couleur, et une réflectance pour un rayonnement infrarouge présentant une longueur d'onde de 1600 nm par rapport à celle correspondant à un rayonnement visible de lumière présentant une longueur d'onde de 600 nm au niveau d'un rapport égal à, ou plus grand que, 2,5.

6. Pigment réflecteur de lumière infrarouge utilisé dans le procédé de réflexion de lumière infrarouge selon la revendication 1.

FIG.1

EP 2 409 782 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000072990 A
- JP 2001311049 A
- JP 2004027241 A
- JP 2004174469 A
- JP 2000264639 A
- JP 2008044805 A
- WO 2007094253 A
- WO 2010013452 A1
- DE 3444595 A1
- EP 1990377 A1
- JP 9328629 A
- JP 63054475 A